# EUROPÄISCHE PATENTSCHRIFT

(11) **EP 1 649 578 B1**
(45) Veröffentlichungstag und Bekanntmachung des Hinweises auf die Patenterteilung: **21.11.2012**
(21) Anmeldenummer: 04763466.2
(22) Anmeldetag: 23.07.2004
(51) Int. Cl.: H02K 9/12

(54) **Elektrische Maschine mit Kühlmittelführungskanal sowie entsprechendes Kühlverfahren**
Electric machine with coolant guiding channel and corresponding cooling method
Machine électrique à canal de guidage d'agent de refroidissement et procédé de refroidissement correspondant

(30) Priorität: 31.07.2003 DE 10335141
(43) Veröffentlichungstag der Anmeldung: 26.04.2006
(73) Patentinhaber: SIEMENS AKTIENGESELLSCHAFT, 80333 München (DE)
(72) Erfinder: PFANNSCHMIDT, Bernd, 90574 Rosstal (DE)
(86) Internationale Anmeldenummer: PCT/EP2004/008299
(87) Internationale Veröffentlichungsnummer: WO 2005/013461

(56) Entgegenhaltungen:
- DE-B- 2 648 824
- US-A1- 2003 102 730
- PATENT ABSTRACTS OF JAPAN Bd. 0093, Nr. 25 (E-368), 20. Dezember 1985 (1985-12-20) -& JP 60 156241 A (TOSHIBA KK), 16. August 1985 (1985-08-16)
- PATENT ABSTRACTS OF JAPAN Bd. 1998, Nr. 01, 30. Januar 1998 (1998-01-30) -& JP 09 233766 A (RAILWAY TECHNICAL RES INST; TOSHIBA CORP), 5. September 1997 (1997-09-05)
- PATENT ABSTRACTS OF JAPAN Bd. 1996, Nr. 10, 31. Oktober 1996 (1996-10-31) -& JP 08 149757 A (MEIDENSHA CORP), 7. Juni 1996 (1996-06-07)

## Beschreibung

Die vorliegende Erfindung betrifft eine elektrische Maschine mit einer zylinderförmigen Magnetanordnung und einer Kühleinrichtung zum Kühlen der Magnetanordnung. Darüber hinaus betrifft die vorliegende Erfindung ein entsprechendes Verfahren zum Kühlen einer elektrischen Maschine.

Vor allem elektrische Maschinen großer Bauart sind in der Regel mit einem Kühlsystem auszustatten. Die übliche Art der Kühlmittelzufuhr ist das direkte Einbringen in den Innenraum der elektrischen Maschine. Meistens erfolgt der Kühlmitteleintritt in eines der beiden Lagerschilde. Gängigerweise wird Luft als Kühlmittel verwendet. Die in den Innenraum geleitete Luft verteilt sich entsprechend den Platzverhältnissen. Die Durchströmung von Kühlkanälen, die beispielsweise in den Blechpaketen der elektrischen Maschine vorgesehen sind, erfolgt entsprechend den sich ergebenden Strömungswiderständen. Bei vielen Motoren ist es notwendig, den Lufteintritt in den Bereich der Lagerschilde zu platzieren, wodurch angemessene Maßnahmen zu ergreifen sind, um einen ausreichenden Kühleffekt zu erzielen.

Aus der Druckschrift JP60156241 ist ein Kühler für eine rotatorische elektrische Maschine bekannt. Das Kühlmittel wird dort in den Wickelkopfraum eingespeist und dringt von dort durch axial verlaufende Kühlkanäle im Stator und Rotor zu dem gegenüberliegenden Wickelkopfraum.

Aus der Druckschrift JP08149757 ist eine kompakte Kühlerstruktur für eine drehende elektrische Maschine bekannt. Mehrere Bohrungen verbinden die gegenüberliegenden Seiten eines rohrförmigen Rahmens eines Motors. Vertiefungen in dem Rahmen, die in Umfangsrichtung verlaufen, verbinden die einzelnen Enden der Bohrungen jeweils an beiden Seiten.

Die Druckschrift JP09233766 zeigt ferner einen Motor, bei dem das Kühlmittel in radiale Richtung eingespeist und in den Wickelkopfräumen verteilt wird. Kühlkanäle verlaufen in axialer Richtung.

Des Weiteren offenbart die Druckschrift US 2003/0102730 A1 ein Kühlsystem mit zylindrischer Wärmesenke. Kühlluft streicht entlang einer externen Finne zur Rückseite des Generators, fließt durch Löcher in einen Bügelabschnitt, kühlt dort den Stator und wird entlang eines anderen Pfads zur Kühlung des Rotors weitergeleitet.

Schließlich zeigt die Druckschrift DE 26 48 824 B1 eine elektrische Maschine mit einem topfförmigen Lagerschild. Ein Klemmbrett ist innerhalb des Lagerschilds im Bereich von dessen Umfangswand angeordnet.

Die Aufgabe der vorliegenden Erfindung besteht somit darin, eine elektrische Maschine mit einem verbesserten Kühlsystem vorzuschlagen.

Erfindungsgemäß wird diese Aufgabe gelöst durch eine elektrische Maschine nach Anspruch 1. Der Kühlmittelkanal ist in beiden axialen Richtungen offen aber mit einem Ringdeckel **und/oder einem Lagerschild** nach einer Seite ver**schließbar**. Für den Kühlmittelstrom bedeutet dies, dass das Kühlmittel über den Kühlmittelkanal zunächst gleichmäßig am Umfang der Maschine verteilt wird, um dann von dort axial in den Innenraum der Maschine zu strömen. Da der umlaufende Kühlmittelkanal nach beiden Innenräumen (Antriebsseite und Nichtantriebsseite) geöffnet werden kann, eignet sich der Aufbau für ein Universalmotorgehäuse. Dadurch erspart man sich den Aufwand, für die beiden Einsatzfälle zwei unterschiedliche Motorgehäuse bereitstellen zu müssen. Die zweite Öffnung hat ferner Vorteile beim Gießen des Gehäuses und kann so ausgestaltet sein, dass sie ein einfaches Reinigen des umlaufenden Kanals sowie daran anschließender Kanalfortsätze erlaubt.

Das Kühlmittel überstreicht eine möglichst große, erwärmte Oberfläche und erzielt somit eine möglichst große Kühlwirkung. Dies wird dadurch erreicht, dass das Kühlmittel möglichst gleichmäßig am Umfang der Magnetanordnung der elektrischen Maschine verteilt in den Innenraum der Maschine geführt wird. Somit kann verhindert werden, dass gewisse Bereiche am Umfang der Magnetanordnung nicht mit Kühlmittel umströmt werden. Dabei kann es vorteilhaft sein, dass das Kühlmittel gleichzeitig an beiden Seiten der elektrischen Maschine, d.h. der Antriebsseite und der Nichtantriebsseite, eingelassen wird.

Die elektrische Maschine kann erfindungsgemäß so gestaltet sein, dass sie ein Gehäuse aufweist, wobei der Kühlmittelkanal Teil des Gehäuses ist. Diese Einteiligkeit führt zu Fertigungsvorteilen.

Der Kühlmittelkanal kann die Magnetanordnung der elektrischen Maschine vollständig am Umfang umgeben. Damit kann eine ideale Verteilung am Umfang gewährleistet werden. Bei einer alternativen Ausführungsform kann der Kühlmittelkanal aber auch beispielsweise gegenüber der Stelle des Kühlmitteleintritts unterbrochen sein. Dies kann beispielsweise wegen der Einhaltung der Bodenfreiheit bei einem Fahrantrieb, z.B. für Bahnen notwendig sein.

Ein Blechpaket der Magnetanordnung, insbesondere das Statorblechpaket, bildet vorzugsweise eine Wand des Kühlmittelkanals. Speziell können Durchströmkanäle vorgesehen sein, die nach innen durch die Blechpaketoberfläche abgeschlossen sind. Der Kühlmittelstrom wird dann von dem umlaufenden Kühlmittelkanal durch die Durchströmkanäle hindurch in den Innenraum der Maschine z.B. an der Antriebsseite geleitet. Auf diese Weise streift das Kühlmittel zuerst vor Eintritt in den Innenraum des Motors die Blechpaketoberfläche und kühlt diese. Dadurch wird eine bessere Kühlwirkung der Maschine erreicht, und es kann eine höhere Leistung abgegeben werden.

Der Kühlmittelkanal kann darüber hinaus in axialer Richtung vor der zylinderförmigen Magnetanordnung angeordnet sein. Generell kann der Kühlmittelkanal in einem beliebigen Radius um die Achse der elektrischen Maschine angeordnet sein kann. Er ist also nicht zwangsläufig radial über der Magnetanordnung der elektrischen Maschine anzubringen.

An dem Kühlmittelkanal können ein oder mehrere Kühlmitteleintritte bezogen auf die zylinderförmige Magnetanordnung radial und/oder axial angeordnet sein. Vorteilhafterweise sind sowohl ein radialer als auch ein axialer Kühlmitteleintritt vorgesehen, wobei jeweils nur von einem entsprechend dem Einsatzfall Gebrauch gemacht wird.

Die elektrische Maschine kann außerdem einen Motorklemmenanschlusskasten aufweisen, wobei der umlaufende Kühlmittelkanal im Bereich des Motorklemmenanschlusskastens in radialer Richtung in seinem Ausmaß reduziert ist. Durch die Verjüngung des Kühlmittelkanals kann Bauraum in radialer Richtung eingespart werden.

Das Gehäuse der elektrischen Maschine kann als separates Teil, nämlich als Gussteil oder Schweißkonstruktion, ausgeführt sein. In diesem Gehäuse wird dann das Blechpaket mit Wicklung, beispielsweise mittels Passfedern oder Schrauben befestigt. Alternativ kann das Gehäuse als Druckplattenkonstruktion ausgeführt sein, wobei das Blechpaket zwischen zwei Druckplatten gepresst und durch verschweißte Zugleisten zusammengehalten wird.

Die vorliegende Erfindung wird nun anhand der beigefügten Zeichnungen näher erläutert, in denen zeigen:
- FIG 1: eine Querschnittsansicht einer erfindungsgemäßen elektrischen Maschine und
- FIG 2: eine Draufsicht auf die Nichtantriebsseite der elektrischen Maschine von FIG 1.

Das nachfolgend näher beschriebene Ausführungsbeispiel stellt eine bevorzugte Ausführungsform der vorliegenden Erfindung dar.

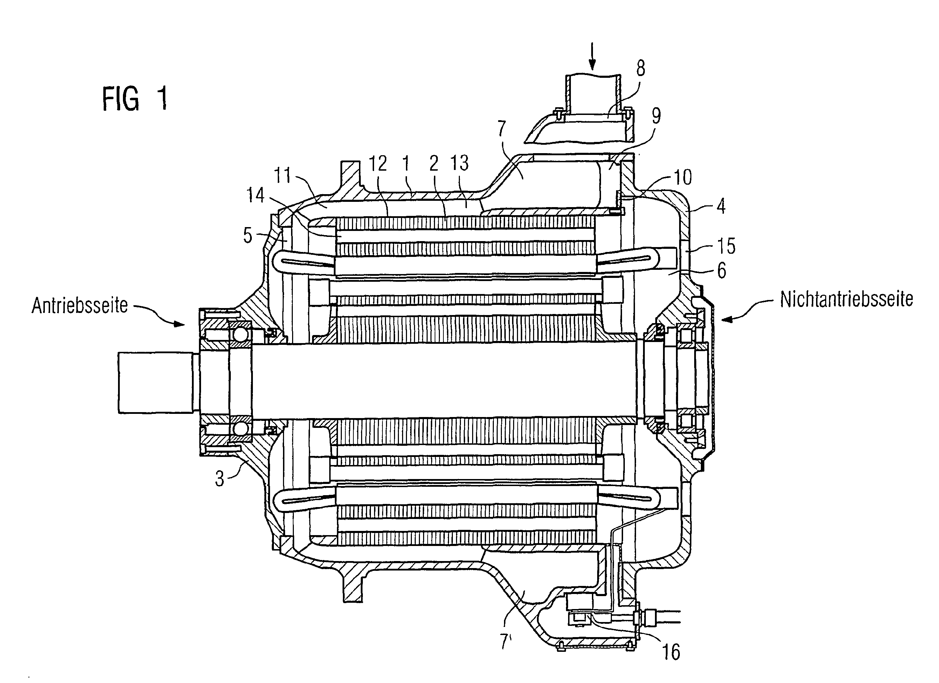

In der Querschnittszeichnung von FIG 1 ist ein Elektromotor mit Gehäuse 1 dargestellt. Das Gehäuse 1 umgibt das Blechpaket 2 des Stators. An der Antriebsseite und der Nichtantriebsseite ist der Motor mit Lagerschilden 3 und 4 abgeschlossen. Dadurch bildet sich antriebsseitig ein Motorinnenraum 5 und nichtantriebsseitig ein Motorinnenraum 6.

In das Gehäuse 1 ist ein umlaufender Kühlmittelkanal 7 integriert. Dieser ist mit dem Gehäuse 1 einteilig gegossen. Er umläuft das Blechpaket 2 an dessen Außenumfang vollständig. An den Kühlmittelkanal 7 ist an dessen Außenumfang ein Kühlmitteleintritt 8 montiert. Damit kann das Kühlmittel im Wesentlichen radial in den umlaufenden Kühlmittelkanal 7 eingebracht werden, wie es der Pfeil andeutet.

Der umlaufende Kühlmittelkanal ist zur Nichtantriebsseite hin offen. Im Bereich dieser Ringöffnung wird der Kühlmittelkanal 7 durch Rippen 9 versteift. Durch das Lagerschild 4 an der Nichtantriebsseite wird diese Öffnung des Kühlmittelkanals 7 teilweise abgedeckt. Vollkommen verschlossen wird die Öffnung durch einen ringförmigen Deckel 10.

Der umlaufende Kühlmittelkanal 7 besitzt in axialer Richtung zur Antriebsseite hin mehrere Öffnungen, so dass das Kühlmittel in Axialkanälen 11 in axialer Richtung über das Blechpaket 2 zu dem antriebsseitigen Motorinnenraum strömen kann. Dabei strömt das Kühlmittel unmittelbar an der Oberfläche 12 des Blechpakets 2, so dass möglichst viel Wärme an das Kühlmittel abgegeben werden kann. Die Axialkanäle sind durch Rippen 13 voneinander getrennt, die zum Abstützen des Gehäuses 1 auf dem Blechpaket 2 dienen.

In dem Blechpaket 2 sind Bohrungen 14 vorgesehen, durch die das Kühlmittel durch den Stator (ähnliches gilt für den Läufer) strömen kann. Schließlich ist das Lagerschild 4 an der Nichtantriebsseite mit Aussparungen 15 versehen, durch die das Kühlmittel aus dem Motor austreten kann. Damit ergibt sich ein Kühlmittelstromverlauf vom Kühlmitteleintritt 8 in den umlaufenden Kühlmittelkanal 7, die anschließenden Axialkanäle 11, den Motorinnenraum 5, die Bohrungen 14 im Blechpaket, den Motorinnenraum 6 an der Nichtantriebsseite und schließlich durch die Aussparungen 15 im nichtantriebsseitigen Lagerschild 4 nach außen. Hierzu ist festzustellen, dass sich das Kühlmittel beim Eintritt in den Kühlmittelkanal 7 zunächst in Umfangsrichtung verteilt, da der Kühlmittelkanal 7 einen größeren Querschnitt und damit einen geringeren Strömungswiderstand als die Axialkanäle 11 besitzt.

Falls der Ringdeckel 10 nicht eingesetzt wird, kann das Kühlmittel auch unmittelbar von dem umlaufenden Kühlmittelkanal 7 in den nichtantriebsseitigen Motorinnenraum strömen, so dass beispielsweise auch die Wickelköpfe im nichtantriebsseitigen Motorinnenraum 6 mit weniger erwärmtem Kühlmittel umströmt werden können. Diese Abänderung des Strömungsverlaufs im Motor kann somit durch eine wenig aufwändige Maßnahme, nämlich lediglich das Anbringen oder Abnehmen des Ringdeckels 10, durchgeführt werden. Es ist jedoch keine Änderung des Gehäuses notwendig, so dass das Gehäuse universell einsetzbar ist.

Die elektrischen Anschlüsse des Motors erfolgen über einen Motorklemmenanschlusskasten 16, der am Außenumfang des umlaufenden Kühlmittelkanals 7 angeordnet ist. In dem Ausführungsbeispiel von FIG 1 ist er diametral gegenüber dem Kühlmitteleintritt 8 vorgesehen. Um die radialen Abmessungen des Motors etwas zu reduzieren, ist der umlaufende Kühlmittelkanal 7 im Bereich des Motorklemmenanschlusskasten 16 etwas verjüngt, so dass sich in diesem Bereich ein Kühlmittelkanal 7' mit vermindertem Querschnitt ergibt.

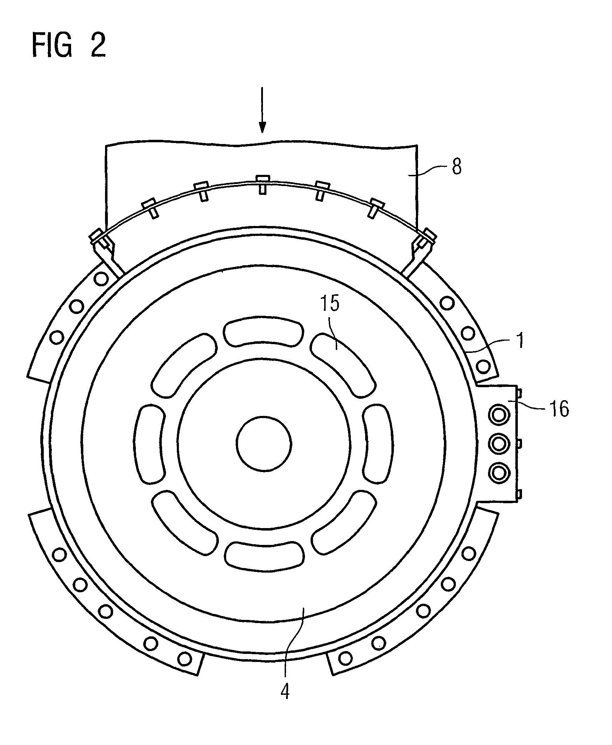

In FIG 2 ist der Motor von FIG 1 in einer nichtantriebsseitigen Draufsicht dargestellt. Deutlich zu erkennen ist hier der radiale Kühlmitteleintritt 8 und die Aussparungen 15, durch die das Kühlmittel, insbesondere Luft, nach außen strömt. Bei der Gestaltung von FIG 2 ist der Motorklemmenanschlusskasten 16 nicht gegenüber dem Kühlmitteleintritt 8, sondern senkrecht zu der Kühlmitteleintrittsrichtung am Gehäuse 1 angebracht.

## Patentansprüche

1. Elektrische Maschine mit
- einer zylinderförmigen Magnetanordnung (2), die in einem Gehäuse (1) angeordnet ist, das an der Antriebsseite und an der Nichtantriebsseite mit Lagerschilden (3, 4) abgeschlossen ist, so dass ein antriebsseitiger Motorinnenraum (5) und ein nichtantriebsseitiger Motorinnenraum (6) gebildet sind und
- einer Kühleinrichtung zum Kühlen der Magnetanordnung (2), die einen Kühlmittelkanal (7) aufweist, mit dem ein Kühlmittel in Umfangsrichtung der zylinderförmigen Magnetanordnung (2) im Wesentlichen gleichmäßig verteilbar ist,
- wobei der Kühlmittelkanal (7) in axialer Richtung zur Antriebsseite hin mehrere Öffnungen aufweist, so dass Kühlmittel vom Kühlmittelkanal (7) in Axialkühlkanälen (11) in axialer Richtung über ein Blechpaket (2) eines Stators der Magnetanordnung (2) zu dem antriebsseitigen Motorinnenraum (5) strömen kann,
- wobei Bohrungen (14) im Blechpaket von Stator und/oder Läufer der Magnetanordnung in axialer Richtung von dem antriebsseitigen Motorinnenraum (5) zum nichtantriebsseitigen Motorinnenraum (6) vorgesehen sind,
- wobei der Kühlmittelkanal (7) in axialer Richtung zum nichtantriebsseitigen Motorinnenraums (6) offen ist und mit dem Lagerschild (4) und/oder einem dafür vorgesehenen Ringdeckel (10) abdeckbar ist,
so dass sich bei in Richtung des nichtantriebsseitigen Motorinnenraums abgedecktem Kühlmittelkanal (7) ein Kühlmittelfluss in Umfangsrichtung entlang des Kühlmittelkanals (7), in axialer Richtung durch die axialen Kühlkanäle (11) in den antriebsseitigen Motorinnenraum (5) und anschließend in axialer Richtung vom antriebsseitigen Motorinnenraum (5) durch die Bohrungen (14) in den nichtantriebsseitigen Motorinnenraum (6) ergibt,
oder so dass sich bei in Richtung des nichtantriebsseitigen Motorinnenraums offenem Kühlmittelkanal (7) ein Kühlmittelfluss in Umfangsrichtung entlang des Kühlmittelkanals (7), in beide axiale Richtung zum einen durch die axialen Kühlkanäle (11) in den antriebsseitigen Motorinnenraum (5) und anschließend in axialer Richtung vom antriebsseitigen Motorinnenraum (5) durch die Bohrungen (14) in den nichtantriebsseitigen Motorinnenraum (6) der Nichtantriebsseite und vom Kühlmittelkanal (7) unmittelbar in den nichtantriebsseitigen Motorinnenraum (6) ergibt.

2. Elektrische Maschine nach Anspruch 1, die ein Gehäuse (1) aufweist, wobei der Kühlmittelkanal (7) Teil des Gehäuses (1) ist.

3. Elektrische Maschine nach Anspruch 1 oder 2, wobei der Kühlmittelkanal (7) die Magnetanordnung (2) vollständig am Umfang umgibt.

4. Elektrische Maschine nach einem der vorhergehenden Ansprüche, wobei der Kühlmittelkanal (7) diametral gegenüber einem Kühlmitteleintritt (8) unterbrochen ist.

5. Elektrische Maschine nach einem der vorhergehenden Ansprüche, wobei ein Blechpaket der Magnetanordnung (2) eine Wand des Kühlmittelkanals bildet.

6. Elektrische Maschine nach Anspruch 1 oder 2, wobei der Kühlmittelkanal (7) in axialer Richtung vor der zylinderförmigen Magnetanordnung (2) angeordnet ist.

7. Elektrische Maschine nach einem der vorhergehenden Ansprüche, wobei ein oder mehrere Kühlmitteleintritte (8) an den Kühlmittelkanal (7) bezogen auf die zylinderförmige Magnetanordnung (2) radial und/oder axial angeordnet sind.

8. Elektrische Maschine nach einem der vorhergehenden Ansprüche, die einen Motorklemmenanschlusskasten (16) aufweist, wobei der Kühlmittelkanal (7) im Bereich des Motorklemmenanschlusskastens (16) in radialer Richtung in seinem Ausmaß reduziert ist.

9. Elektrische Maschine nach einem der Ansprüche 2 bis 8, wobei das Gehäuse (1) aus einer Druckplattenkonstruktion besteht.

## Claims

1. Electric machine with
- a cylindrical magnet arrangement (2) which is arranged in a housing (1) which is closed off by bearing shields (3, 4) on the drive side and on the non-drive side, such that a drive-side motor interior (5) and a non-drive-side motor interior (6) are formed, and
- a cooling device for cooling the magnet arrangement (2), which cooling device has a coolant channel (7), by means of which a coolant can be distributed essentially uniformly in the circumferential direction of the cylindrical magnet arrangement (2),
- wherein the coolant channel (7) possesses a plurality of orifices toward the drive side in the axial direction, so that coolant from the coolant channel (7) can flow in axial cooling channels (11) in the axial direction to the drive-side motor interior (5) via a laminated core (2) of a stator of the magnet arrangement (2),
- wherein bores (14) are provided in the laminated core of the stator and/or rotor of the magnet arrangement in the axial direction from the drive-side motor interior (5) to the non-drive-side motor interior (6),
- wherein the coolant channel (7) is open toward the non-drive-side motor interior (6) in the axial direction and can be covered by the bearing shield (4) and/or an annular cover (10) provided for this purpose,
such that, when the coolant channel (7) is covered in the direction of the non-drive-side motor interior, there is a resulting coolant stream in the circumferential direction along the coolant channel (7), in the axial direction through the axial cooling channels (11) into the drive-side motor interior (5), and subsequently in the axial direction from the drive-side motor interior (5) through the bores (14) into the non-drive-side motor interior (6),
or such that, when the coolant channel (7) is open in the direction of the non-drive-side motor interior, there is a resulting coolant stream in the circumferential direction along the coolant channel (7), in both axial directions firstly through the axial cooling channels (11) into the drive-side motor interior (5) and subsequently in the axial direction from the drive-side motor interior (5) through the bores (14) into the non-drive-side motor interior (6) of the non-drive side, and from the coolant channel (7) directly into the non-drive-side motor interior (6).

2. Electric machine according to Claim 1, which has a housing (1), the coolant channel (7) being part of the housing (1).

3. Electric machine according to Claim 1 or 2, the coolant (7) surrounding the magnet arrangement (2) completely on the circumference.

4. Electric machine according to one of the preceding claims, the coolant channel (7) being interrupted diametrically opposite a coolant entry (8).

5. Electric machine according to one of the preceding claims, a laminated core of the magnet arrangement (2) forming a wall of the coolant channel.

6. Electric machine according to Claim 1 or 2, the coolant channel (7) being arranged upstream of the cylindrical magnet arrangement (2) in the axial direction.

7. Electric machine according to one of the preceding claims, one or more coolant entries (8) being arranged on the coolant channel (7) radially and/or axially with respect to the cylindrical magnet arrangement (2).

8. Electric machine according to one of the preceding claims, which has a motor terminal junction box (16), the coolant channel (7) being reduced in its dimension in the radial direction in the region of the motor terminal junction box (16).

9. Electric machine according to one of Claims 2 to 8, the housing (1) consisting of a pressure plate structure.

## Revendications

1. Machine électrique comprenant
- un dispositif ( 2 ) magnétique en forme de cylindre, qui est disposé dans un carter ( 1 ), lequel est fermé, du côté où se trouve l'entraînement et du côté où il ne se trouve pas, par des flasques ( 3, 4 ) formant palier, de manière à former un espace ( 5 ) intérieur du moteur du côté où se trouve l'entraînement et un espace ( 6 ) intérieur du moteur du côté où ne se trouve pas l'entraînement et
- pour le refroidissement du dispositif ( 2 ) magnétique, un dispositif de refroidissement, qui a un canal ( 7 ) pour du fluide réfrigérant, par lequel un fluide réfrigérant peut être réparti d'une manière sensiblement uniforme dans la direction périphérique du dispositif ( 2 ) magnétique en forme de cylindre,
- dans lequel le canal ( 7 ) pour du fluide réfrigérant a, dans la direction axiale, plusieurs ouvertures s'ouvrant du côté de l'entraînement, de sorte que du fluide réfrigérant peut s'écouler du canal (7) pour du fluide réfrigérant dans des canaux ( 11 ) de refroidissement axiaux, dans la direction axiale, en passant par un paquet ( 2 ) de tôles d'un stator du dispositif ( 2 ) magnétique vers l'intérieur ( 5 ) du moteur du côté où se trouve l'entraînement,
- dans lequel il est prévu des trous ( 14 ) dans le paquet de tôles du stator et/ou du rotor du dispositif magnétique dans la direction axiale allant de l'espace ( 5 ) intérieur du moteur du côté où se trouve l'entraînement à l'espace ( 6 ) intérieur du moteur du côté où ne se trouve pas l'entraînement,
- dans lequel le canal ( 7 ) pour du fluide réfrigérant est ouvert dans la direction axiale vers l'espace ( 6 ) intérieur du moteur du côté où ne se trouve pas l'entraînement et peut être recouvert du flasque (4) formant palier et/ou d'un couvercle ( 10 ) annulaire prévu à cet effet,
de manière à obtenir, pour un canal ( 7 ) pour du fluide réfrigérant recouvert dans la direction de l'espace intérieur du moteur du côté où ne se trouve pas l'entraînement, un flux d'agent réfrigérant dans la direction périphérique le long du canal ( 7 ) pour du fluide réfrigérant, dans la direction axiale par les canaux ( 11 ) de refroidissement axiaux dans l'espace ( 5 ) intérieur du moteur du côté où se trouve l'entraînement et ensuite, dans la direction radiale, de l'espace ( 5 ) intérieur du moteur du côté où se trouve l'entraînement à l'espace ( 6 ) intérieur du moteur du côté où ne se trouve pas l'entraînement en passant par les trous ( 14 ),
ou de manière à obtenir, pour un canal ( 7 ) pour du fluide réfrigérant ouvert dans la direction de l'espace intérieur du moteur du côté où ne se trouve pas l'entraînement, un flux d'agent réfrigérant dans la direction périphérique le long du canal ( 7 ) pour du fluide réfrigérant, dans les deux directions axiales d'une part par les canaux ( 11 ) de refroidissement axiaux dans l'espace ( 5 ) intérieur du moteur du côté où se trouve l'entraînement et ensuite dans la direction axiale en allant de l'espace ( 5 ) intérieur du moteur du côté où ne se trouve pas l'entraînement en passant par les trous ( 14 ) et du canal ( 7 ) pour du réfrigérant directement dans l'espace ( 6 ) intérieur du moteur du côté où ne se trouve pas l'entraînement.

2. Machine électrique suivant la revendication 1, qui a un carter ( 1 ), le canal ( 7 ) pour du réfrigérant faisant partie du carter ( 1 ).

3. Machine électrique suivant la revendication 1 ou 2, dans laquelle le canal ( 7 ) pour du réfrigérant entoure complètement sur le pourtour le dispositif ( 2 ) magnétique.

4. Machine électrique suivant l'une des revendications précédentes, dans laquelle le canal ( 7 ) pour du réfrigérant est interrompu diamétralement en face d'une entrée ( 8 ) pour du réfrigérant.

5. Machine électrique suivant l'une des revendications précédentes, dans laquelle un paquet de tôles du dispositif ( 2 ) magnétique forme une paroi du canal pour du réfrigérant.

6. Machine électrique suivant la revendication 1 ou 2, dans laquelle le canal ( 7 ) pour du réfrigérant est monté dans la direction axiale avant le dispositif ( 2 ) magnétique en forme de cylindre.

7. Machine électrique suivant l'une des revendications précédentes, dans laquelle une entrée ( 8 ) ou plusieurs entrées ( 8 ) pour du réfrigérant est ou sont, rapportée(s) au dispositif ( 2 ) magnétique en forme de cylindre, disposé(es) radialement et/ou axialement sur le canal ( 7 ) pour du réfrigérant.

8. Machine électrique suivant l'une des revendications précédentes, qui comporte un caisson ( 16 ) de raccordement de bornes du moteur, la dimension du canal ( 7 ) pour du fluide réfrigérant étant réduite dans la direction radiale dans la zone du caisson ( 16 ) de raccordement des bornes du moteur.

9. Machine électrique suivant l'une des revendications 2 à 8, dans laquelle le carter ( 1 ) est constitué d'une construction en plaque résistante à la pression.
